(19) Europäisches Patentamt
European Patent Office
Office européen des brevets

(11) **EP 4 539 560 A1**

(12) **EUROPEAN PATENT APPLICATION**

(43) Date of publication:
**16.04.2025 Bulletin 2025/16**

(21) Application number: **23203209.4**

(22) Date of filing: **12.10.2023**

(51) International Patent Classification (IPC):
$H04W\ 52/28^{(2009.01)}$    $H04L\ 41/08^{(2022.01)}$
$H04L\ 41/0895^{(2022.01)}$    $H04L\ 41/122^{(2022.01)}$
$H04W\ 16/10^{(2009.01)}$    $H04W\ 24/02^{(2009.01)}$
$H04W\ 52/02^{(2009.01)}$    $H04W\ 72/044^{(2023.01)}$
$H04W\ 72/50^{(2023.01)}$

(52) Cooperative Patent Classification (CPC):
**G06F 1/3206; G06F 1/3209; G06F 1/3234;
G06F 1/3287; H04L 41/082; H04L 41/0833;
H04L 41/40; H04W 52/0245; H04W 52/0258;
H04W 52/028;** H04W 24/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.
Tokyo 100-6150 (JP)**

(72) Inventors:
• **KATSALIS, Kostas
80687 Munich (DE)**

• **TRIAY, Joan
80687 Munich (DE)**
• **KUNO, Yuya
Tokyo, 100-6150 (JP)**
• **TANIGUCHI, Kosuke
Tokyo, 100-6150 (JP)**

(74) Representative: **Viering, Jentschura & Partner
mbB
Patent- und Rechtsanwälte
Am Brauhaus 8
01099 Dresden (DE)**

(54) **METHOD FOR POWER MANAGEMENT OF A COMMUNICATION SYSTEM**

(57) According to one embodiment, a method for power management of a communication system is described, comprising providing a network service by means of one or more functional components, determining one or more power weights, each power weight specifying a dependency between power states, deciding to change the power state of at least one of the network service and the one or more functional components and updating, in response to the decided change, the power states of the network service and the one or more functional components taking into account the dependencies of the power state of the network service and/or of the one or more functional components as specified by the power weights.

**FIG 11**

1100

1101 Providing network service

1102 Determine power weights

1103 Decide to change power state

1104 Update power state(s) according to power weights

EP 4 539 560 A1

## Description

The present disclosure relates to methods for power management of communication systems.

Communication systems include a high number of functional components which work together to provide network services. Accordingly, the power consumption of a network service may depend on the power consumption of multiple functional components. Power management is made even more complex by the fact that functional components such as virtual network functions, physical network functions and nested network services may be shared among multiple network services. Therefore, approaches for power management of a communication system which allows efficiently handling such kind of scenarios are desirable.

According to one embodiment, a method for power management of a communication system is provided, comprising providing a network service by means of one or more functional components, determining one or more power weights, each power weight specifying a dependency

- between a power state of the network service and the power state of a respective functional component of the one or more functional components,
- between the power states of two respective functional components of the one or more functional components or
- between the power state of a respective functional component of the one or more functional components and another network service,

deciding to change the power state of at least one of the network service and the one or more functional components and updating, in response to the decided change, the power states of the network service and the one or more functional components taking into account the dependencies of the power state of the network service and/or of the one or more functional components (in particular from the power state whose change has been decided) as specified by the power weights.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1     shows a mobile radio communication system.

Figure 2     illustrates an OSSBSS (operations support system and business support system) and a simplified version of the Network Functions Virtualisation Management and Orchestration (NFV-MANO) Architectural Framework.

Figure 3     illustrates a dependency of NS power states from VNF (virtual network function) power states.

Figure 4     illustrates three network services with shared VNFs.

Figure 5     illustrates three network services, where one network service is shared.

Figure 6     shows an NFV architecture including a NS power manager function (NSPoMF) according to an embodiment.

Figure 7     illustrates a network service (NS) moving from active power state to stand-by power state and returning from stand-by power state to active power state.

Figure 8     shows a flow diagram illustrating a procedure for autonomously updating an NS power state.

Figure 9     shows a flow diagram illustrating a procedure for autonomously updating NS power weights.

Figure 10    shows a flow diagram illustrating a procedure for autonomously updating a NS power state of a shared VNF.

Figure 11    shows a flow diagram 1100 illustrating a method for power management of communication system.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:

Example 1 is a method for power management of a communication system, comprising

- Providing a network service by means of one or more functional components;
- Determining one or more power weights, each power weight specifying a dependency

  ◦ between a power state of the network service and the power state of a respective functional component,

○ between the power states of two respective functional components of the one or more functional components or

○ between the power state of a respective functional component and another network service;

• Deciding to change the power state of at least one of the network service and the one or more functional components; and

• Updating, in response to the decided change, the power states of the network service and the one or more functional components taking into account the dependencies of the power state of the network service and/or of the one or more functional components as specified by the power weights.

Example 2 is the method of example 1, wherein the one or more functional components are one or more virtual network functions, one or more cloudified network functions, one or more physical network functions and/or one or more nested network services.

Example 3 is the method of example 1 or 2, wherein for each power weight the magnitude of the respective power weight specifies a degree of the respective dependency and the updating takes the specified degree of the respective dependency into account.

Example 4 is the method of any one of examples 1 to 3, wherein the updating resolves conflicts by comparing degrees of dependencies and respecting dependencies between functional components.

Example 5 is the method of any one of examples 1 to 4, wherein at least one of the one or more power weights specifies that a respective first functional component must not go into a first power state when a respective dependent second functional component is in a second power state.

Example 6 is the method of any one of examples 1 to 5, wherein the decided change is a change of the power state of the network service and wherein at least one of the one or more power weights specifies that the power state of a respective functional component is kept unchanged when the power state of the network service is changed in response to the decided change.

Example 7 is the method of any one of examples 1 to 5, wherein the decided change is a change of the power state of one of the functional components and wherein at least one of the one or more power weights specifies that the power state of the network service is kept unchanged when the power state of the one of the functional component is changed in response to the decided change.

Example 8 is the method of any one of examples 1 to 7, wherein at least one of the one or more power weights specifies that the power state of a respective functional component, wherein the respective functional component is shared with the other network service, must respect the power state of the other network service when updating the power state of the respective functional component.

Example 9 is the method of any one of examples 1 to 8, wherein the decided change is a return from a second power state to a first power state, wherein an earlier change changed the power state from the first power state to the second power state.

Example 10 is the method of example 9, comprising saving the power weights when changing the power state from the first power state to the second power state.

Example 11 is the method of example 10, comprising taking into account the dependencies of the power state of the network service and/or of the one or more functional components as specified by the saved power weights.

Example 12 is the method of any one of examples 1 to 11, wherein determining the one or more power weights comprises receiving a network service descriptor of the network service and reading the power weights from the network service descriptor.

Example 13 is the method of any one of examples 1 to 12, comprising updating the power weights in response to operation information about the communication system and storing the updated power weights.

Example 14 is a power management system of a communication system configured to perform the method of any one of examples 1 to 13.

It should be noted that one or more of the features of any of the examples above may be combined with any one of the other examples. In particular, the examples described in context of the device are analogously valid for the method.

According to further embodiments, a computer program and a computer readable medium comprising instructions, which, when executed by a computer, make the computer perform the method of any one of the above examples are provided.

In the following, various examples will be described in more detail.

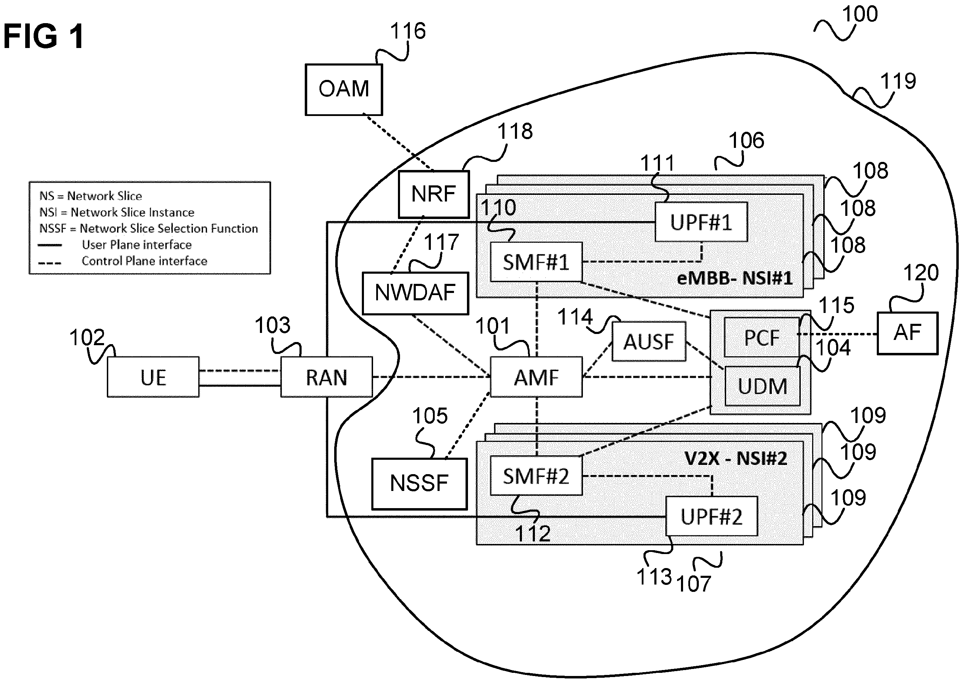

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice.

In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function).

The core network 119 may further include a Network Data Analytics Function (NWDAF) 117. The NWDAF is responsible for providing network analytics and/or prediction information upon request from network functions.

The various network functions can be implemented on special hardware, i.e. on so-called ACTA (Advanced Telecommunications Computing Architecture) devices. This means that the network functions are implemented as physical network functions deployed on special hardware. The software for implementing the network function is strongly coupled with the hardware.

However, it may be desirable to implement network functions also on non-special hardware, i.e. as software applications running on virtual machines (and/or containers) deployed over COTS (Commercial off-the-shelf) servers (i.e. on general purpose or open computing platforms, i.e. devices). This is enabled by using virtualization technology (e.g. hypervisor, operating system (OS) containers, etc.) network functions (e.g., SMF, PCF, etc.) can be deployed in virtual machines (VMs having one or more vCPUs) and/or (operation system (OS)) containers (containers can be seen as kind of "lightweight" VMs that runs directly on an OS). They are then referred to as virtual network functions (VNFs). VMs and OS containers are herein referred to by the general term "virtualization containers".

Network Function Virtualization Management and Orchestration (NFV-MANO) is a key element of the ETSI (European Telecommunications Standards Institute) network functions virtualization (NFV) architecture. NFV-MANO is an architectural framework that coordinates network resources for cloud-based applications and the lifecycle management of virtual network functions (VNFs) and network services. As such, it is crucial for ensuring rapid, reliable NFV deployments at scale. NFV-MANO includes, among others, the NFV orchestrator (NFVO), the VNF manager (VNFM), and the virtual infrastructure manager (VIM). Network services, as managed objects by NFV-MANO, can be used to deploy and perform the lifecycle management of network slices. There is a network slice N:1 network service relationship, i.e., one network service can be mapped to one or more network slices. In this case, the network slice is regarded to provide the "application view" of the network, while the network service regards to the "resource view" of it.

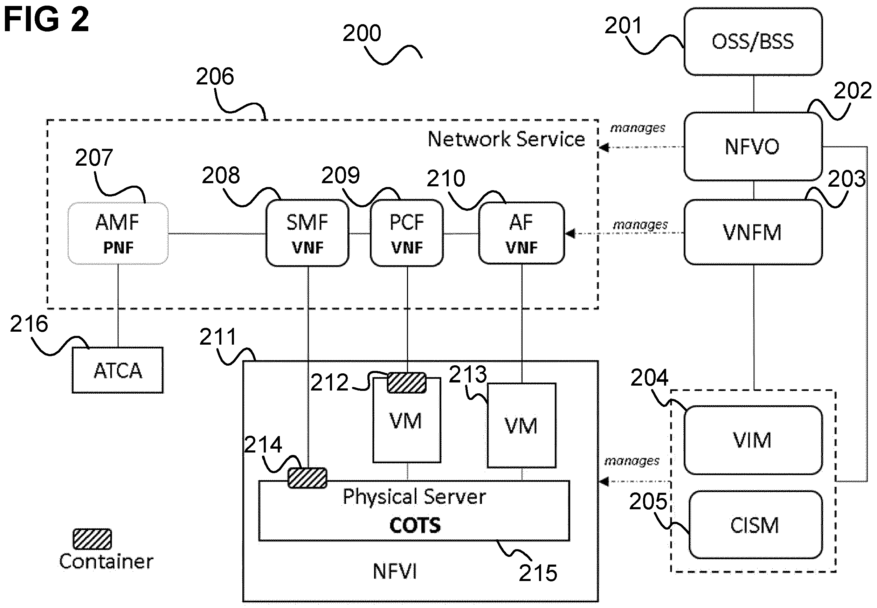

Figure 2 illustrates an OSSBSS (operations support system and business support system) 201 and a simplified version of the NFV-MANO architectural framework. This includes a collection of functional blocks and functions, data repositories used by these functional blocks, and reference points and interfaces through which these functional blocks exchange information for the purpose of managing and orchestrating NFV.

Specifically, NFV-MANO includes an NFVO 202, a VNFM 203, a VIM 204 and CISM (Container Infrastructure Services Management) 205. In the following, due to the similar management scope of the two functions (the VIM on virtualised resources such as VM, and CISM on OS containers), it is assumed that the CISM 205 is part of the VIM 204 so reference is only made to the VIM 204 (i.e. VIM 204 and CISM 205 are summarized as indicated by the dashed line and referred to by VIM 204).

The NFVO 202 manages a network service (NS) 206 which, in this example, includes an AMF 207, an SMF 208, a PCF 209 and an AF 210. A network service (NS) is a composition of network function(s) and/or service(s), defined by its functional and behavioural specification, and it can be mapped to a network slice, as indicated previously.

The architecture 200 further includes an NFVI 211 which includes hardware and software components that build up the environment in which VNFs are deployed.

In this example, the SMF 208, the PCF 209 and the AF 210 are implemented as VNFs, i.e. as NFs that can be deployed on the NFVI 211. The PCF 209 is implemented by a container 212 running in a virtual machine, the AF 210 on a virtual machine 213 and the SMF 208 in a container 214, all running on a COTS server 215. The AMF 207, in contrast, is implemented on an ATCA device 216, i.e. is a physical network function.

The NFVO 202 manages the NS lifecycle and coordinates the management of NS lifecycle, VNF lifecycle (supported by the VNFM 203) and NFVI resources (supported by the VIM 204) to ensure an optimized allocation of the necessary resources and connectivity.

The VNFM 203 is responsible for the lifecycle management of VNFs.

The VIM 204 is a functional block that is responsible for controlling and managing the NFVI compute, storage and network resources, typically within one operator's infrastructure domain.

It should be noted that the network functionality according to 3GPP is responsible for the management and configuration of the Network Functions (NFs) and interactions between NFs while it is not responsible for the management of the virtual network function aspects. From an NFV-MANO perspective it is irrelevant which is the actual NF that is "hosted" inside the VNF.

The 3GPP network functionality (element managers in communication with an OSS) manages the network functions and the NFV-MANO (also in communication with the OSS) manages the VNFs which implement (i.e. host) them.

From NFV-MANO perspective VNF management (life cycle management (LCM) such as instantiation, update and termination of VNF instances) is made by NFV-MANO (specifically the VNFM) and its application configuration is driven by an element manager or OSS.

According to various embodiments, an approach for power management at network service (NS) level is provided which considers the disaggregation between physical network functions (as the AMF 207 in the example of figure 2) and software introduced by the virtualization layer (as the SMF 208, PCF 209 and AF 210 in the example of figure 2). In particular, an approach for managing NS power management profiles when related to VNF power profiles in a dynamic way and not fixed associations is provided as well as an approach to maintain NS runtime information (e.g. VNF identification information and configuration information inside the VNF/VM) and NFV-MANO managed objects information during power state transitions of a network service.

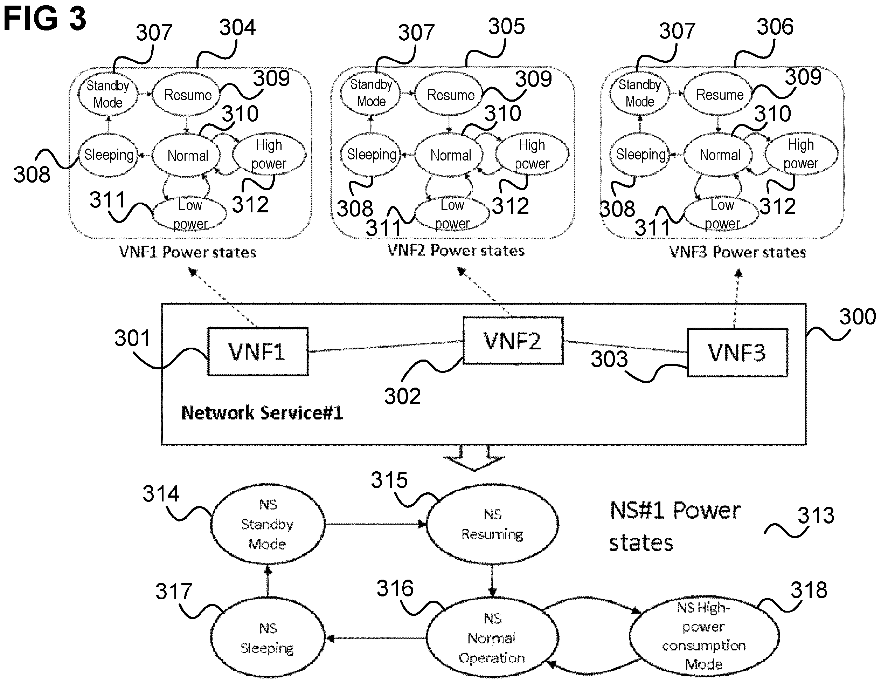

Figure 3 illustrates a dependency of NS power states from VNF power states.

In this example, a network service 300 comprises three VNFs 301, 302, 303. The power state of each VNF 301, 302, 303 and the transitions between the possible power states are given by a respective VNF (power) state machine 304, 305, 306.

In this example, each VNF 301, 302, 303 has a VNF stand-by mode state 307, a VNF sleeping (i.e. going to stand-by) state 308, a VNF resuming state 309, a VNF normal operation state 310, a VNF low-power consumption mode state 311 and a VNF high-power consumption mode state 312.

The sleeping mode state 308 may be a low-power consumption mode that is an intermediate state before standby mode 307 (which is the "lowest-power consumption mode").

Depending on the power state of each VNF 301, 302, 303, the network service has a certain power state within a NS (power) state machine 313 which has, in this example, an NS standby mode 314, an NS resuming mode 315, an NS normal operation mode 316, an NS sleeping mode 317 and an NS high power consumption mode 318. The power states for the NS and the power states for the VNF may also differ.

It should be noted, the more general terms "high-power state" and "low-power state" are used herein, wherein the high-power state may for example be an active state and the low-power state may for example be a standby state. However, there may be finer granularity so that the high-power state and low-power state for example differ in that the power consumption of the high-power state is higher than the one of the low-power state e.g. those are for example the high-power consumption mode and the low-power consumption mode), for example because a certain resource (or multiple resources) is (are) used more in the high-power state than in the low-power state (e.g. CPU power, network (e.g. radio) resources, memory, etc.) The high-power state may also be referred to as "first power state" and the low-power state as "second power state" or vice versa.

According to embodiments, an approach for power management on the NS level (and from NS 300 perspective) is provided considering its impact on the VNFs 301, 302, 303. The same approach is also applicable for the case of Containerized Network Functions (CNFs) and also Physical Network Functions (PNFs) which are part of a Network Service. For each VNF, CNF and PNF which is part of a Network Service, power state machine exists. At each point in time, every VNF, CNF and PNF are in a specific power state. In the following descriptions, VNFs are used as examples and the same principles are used also for the case of CNFs and PNFs.

Specifically, according to various embodiments, a method for managing NS power states is provided, wherein (at least one or more of)

- Power weights are used to

    ○ dictate the importance of the power state of a VNF 301, 302, 303 for the power state of the NS power state.
    ○ solve dependencies between VNFs when performing power management at the NS level.
    ○ solve dependencies between the NS and one or more other NSs when performing the power management at the NS level

- Power weights may be updated on (e.g. user or operator) demand or autonomously
- Power management (application and virtual resources) and underlying physical power management are jointly considered
- capabilities of power management offered by infrastructure and the management and orchestration system of the elements that are subject to power consumption are leveraged
- after power management operations are performed on the NS, the NS as a whole can successfully recover back to the original power state
- an arbitrary number of network service (and also VNF, CNF, PNF) power states may be managed.

It should be noted that there may be multiple instances of a network service and each instance of a network service may have its own power state. So, in the following reference is made to a network service (in particular with respect to its power state) this may be understood as referring to a respective instance of a network service.

According to various embodiments, the power state of a network service is specified by an "energy aware state" (EAS). Similarly, the power state of a VNF (and similarly of a CNF and a PNF) is specified by an EAS. To distinguish the two, an EAS of an NS is denoted as $EAS^{NS}$ and an EAS of a VNF is denoted as $EAS^{VNF}$. It should be noted that the $EAS^{VNF}$ of a VNF may depend on the power states of its components which may also be specified by EASs. The EAS of a VNF component is denoted by $EAS^{VNFC}$. An EAS can be considered as an operational power profile mode. In the following, "power state" and "operational power profile mode" or simply "power mode" are used interchangeably.

The dependency of a $EAS^{NS}$ from the $EAS^{VNF}$s of the VNFs it contains, the $EAS^{CNF}$s of the CNFs it contains and the $EAS^{PNF}$s of the PNFs it contains is represented by a set containing the $EAS^{VNF}$s, $EAS^{CNF}$s and $EAS^{PNF}$s. For example, for an NS #x which includes VNFs #1 to #n:

$$EAS^{NS\#x} = \{EAS^{VNF\#1}, EAS^{VNF\#2}, \ldots, EAS^{VNF\#n}\}$$

As mentioned above, each $EAS^{VNF}$ may itself depend on the $EAS^{VNFC}$s of its components so in the above representation, each $EAS^{VNF\#i}$ may itself be represented as a set of $EAS^{VNFC}$s, e.g. written in column form such that $EAS^{NS\#x}$ is represented in form of a matrix with a set of columns, each column corresponding to a VNF of the NS and being a set of $EAS^{VNFC}$s of the VNFCs of the VNF, e.g.

$$EAS^{VNF\#x} = \left\{ \begin{Bmatrix} EAS^{VNFC\#1,\#1} \\ \vdots \\ EAS^{VNFC\#1,\#m_1} \end{Bmatrix} \quad \cdots \quad \begin{Bmatrix} EAS^{VNFC\#n,\#1} \\ \vdots \\ EAS^{VNFC\#n,\#m_n} \end{Bmatrix} \right\}$$

It should be noted that CNFs and PNFs and their components may be treated similarly.

According to various embodiments, the above representation of a NS power state as set of the power states of its VNFs is extended to allow adjusting the way the power state of a VNF (e.g., standby state) is used to determine the power state of an NS which contains the VNF. Further, according to embodiment, a mechanism to consider inter-VNF relationships is provided. Similarly, for the case of CNFs and PNF like also to consider relationships between VNFs and CNFs, CNFs to PNFs and VNFs to PNFs.

According to various embodiments, this is achieved by using weighted power states, i.e. weighting power states in the above representation.

For example, one or more EAS weight factors are introduced:

- Type 1: power weight used to dictate the "importance" of the VNF (or CNF or PNF) for the $EAS^{NS}$

- Type 2: power weight used to dictate the "importance" of the dependency between the states of VNFs and/or PNFs and or CNFs

- Type 3: power weight used to dictate the "importance" of a shared VNF or CNF or PNF between different NSs (e.g. for network slicing)
- Type 4: power weight used to dictate the "importance" of a shared NS between different NSs (e.g. for network slicing)

According to various embodiments, every $EAS^{VNF}$ and similarly $EAS^{CNF}$ and $EAS^{PNF}$ can be tested and evaluated in different platforms irrelevant of which NS is using them or how it is using them.

These types are described in more detail in the following.

Type 1 is a power weight of a VNF about the "importance" of the VNF (or alternatively CNF or PNF, but VNF is used as an example in the following) inside the respective NS.

So, for VNF#i, a power weight $\overline{w_i}(t)$ is defined for an NS which can vary over time (e.g. depending on direct instructions by OSS/BSS or by using some operational policies). The power weights for all the VNFs of an NS form a vector $\overline{W}(t) = [\overline{w_i}(t)]$ for that NS which represents the criticality (or relevance) of the VNFs (or possibly also CNFs and PNFs) for the NS with regard to power management.

The power weight $\overline{w_i}(t)$ can take a numerical value (e.g. vary between 0 and 1) but other schemes are also possible, depending on the form of $EAS^{VNF}$. For example $\overline{w_1}(t)=0$ indicates that VNF#1, although it is part of the respective NS, is not important when considering the NS power state, i.e. is not taken into account when calculating the NS power state, i.e. $EAS^{NS}$. Depending on the form of the $EAS^{VNF}$s the weighing operation may be a logical operator (which is nevertheless written as multiplication '*' in the following).

The power weight $\overline{w_i}(t)$ can be changed on demand, e.g. by the operator of the communication system using the respective NS power management function or can change automatically due to a LCM (Lifecycle Management operation). In the second case a NFV-MANO management entity (e.g. NFVO or VNFM triggers the power weight update through a call to the NS power management function) or in case of other management systems like in O-RAN the power weights may be update from SMO after interaction with non-RT-RIC or near-RT-RIC. For example,

- The operator requests to change the power weight of $EAS^{VNF\#1}$ from 0 to 1 for NS#1. This means that $EAS^{VNF\#1}$ was initially ignored for $EAS^{NS\#1}$ (e.g. had no impact on NS power state transitions of NS#1) but now is taken into account (e.g. is of maximum importance when 1 is the maximum value of the power weight).
- An intent-based request from a component of the communication system was parsed and the intent handler function decided to change the value of the power weight of a specific VNF (i.e. for the $EAS^{VNF}$) of a specific network service.

- During runtime a MDAF (Management Data Analytics function) decides, upon monitoring and processing data related to a VNF, to change the power weight of a specific VNF (i.e. for the $EAS^{VNF}$) for a specific network service.

With the power weights $\overline{w}_i(t)$, the representation of $EAS^{NS\#1}$ given above changes to

$$EAS^{NS\#x} = \{\overline{w}_1(t)*EAS^{VNF\#1}, \overline{w}_2(t)*EAS^{VNF\#2}, ..., \overline{w}_n(t)*EAS^{VNF\#n}\}$$

For example, for the case of figure 3 with a NS 300 comprising three VNFs 301, 302, 300 (and only one instance per VNF):

$$EAS^{NS\#1} = \{\overline{w}_1(t)*EAS^{VNF\#1}, \overline{w}_2(t)*EAS^{VNF\#2}, \overline{w}_3(t)*EAS^{VNF\#3}\}$$

The EAS of each VNF, i.e. each $EAS^{VNF\#i}$, is for example expressed in Watt. For example, if the consumption of the respective VNF is more than 50 Watt then the state is considered as "active" and if it is less than 50 Watt it is "stand-by", etc.)

Using the power weights for example, VNF#2 should initially (t=0) be ignored for $EAS^{NS\#1}$ and that the importance of VNF#3 is double than VNF#1. This can be achieved by setting e.g.: $\overline{w}_2(t)$ to 0, $\overline{w}_1(t)$ equal to 1 and $\overline{w}_3(t)$ equal to 2.

Assuming that $EAS^{VNF\#1}$ equals 5 Watt and $EAS^{VNF\#3}$ equals 10 Watt then

$$EAS^{NS\#1} = \{1*5 \text{ Watt}, 0*EAS^{VNF\#2}, 2*10 \text{ Watt}\}$$

It may later (t = 5 min) be taken fully into account by changing $\overline{w}_2(t)$ to 1:

$$EAS^{NS\#1} = \{1*5 \text{ Watt}, 1*20 \text{ Watt}, ..., 3*10 \text{ Watt}\}$$

So, the power weights of type 1 allow configuring how important a VNF power state is for the NS power state.

$EAS^{NS\#1}$ is for example the sum of the consumptions of the VNFs (and similarly of CNFs and PNFs), so e.g. $EAS^{NS\#1}$= 5 Watt + 20 Watt + 30 Watt=55 Watt.

More complex schemes than summation can be also considered on the way power weights are used by the system to derive the $EAS^{NS}$.

The power weights of type 2 allow taking into account dependencies between VNFs, CNFs and PNFs. For example, if VNF#1 enters in standby state it might not make sense to preserve CNF#2 in active state for the same NS, e.g. because CNF#2 depends on results provided by VNF#1.

Therefore, according to various embodiments, a dependency matrix VF(t) is defined which may be used for the determination of $EAS^{NS}$ and describes the level of dependency between the power states of the VNFs, CNFs and PNFs that provide the power state of the NS and vice versa.

Specifically, considering the case of VNFs as an example and similarly for CNFs and PNFs, the relationship between the VNFs' $EAS^{VNF}$s is for example represented by an upper triangular matrix IV(t) containing power weights $\overline{w}_{ij}(t)$ wherein $w_{ij}(t)$ denotes the dependency level of the power state of VNF#i (or generally network function #i which may also be a PNF or CNF) and VNF#j (or generally network function #j), e.g. for the example of figure 3 with three VNFs 301, 302, 303:

$$W(t) = \begin{bmatrix} 1 & w_{12}(t) & w_{13}(t) \\ 0 & 1 & w_{23}(t) \\ 0 & 0 & 1 \end{bmatrix}$$

or for the general case:

$$W(t) = \begin{bmatrix} & & \vdots & & & \\ 0 & \dots & 1 & w_{jk}(t) & w_{(j)(k+1)}(t) \dots \\ 0 & \dots & & 1 & w_{(j+1)(k+1)}(t) \dots \\ 0 & \dots & & 0 & 1 \dots \\ & & \vdots & & & \end{bmatrix}$$

The diagonal elements are here equal to 1 and the $w_{ij}(t)$ elements of the table can be designed based on the Virtual Links defined in the network service descriptor (NSD), i.e., whether there is connectivity needed for enabling interactions between VNFs.

It should be noted that this scheme assumes symmetric dependencies. In case of non-symmetric dependencies, $W(t)$ may also be defined as non-triangular matrix.

For example, let

$$W(t) = \begin{bmatrix} 1 & 1 & 0 \\ 0 & 1 & 0.5 \\ 0 & 0 & 1 \end{bmatrix}$$

This means that there is

- high dependency between VNF#1 and VNF#2. If VNF#2 is in standby state VNF#1 can also be in standby.
- There is low dependency between VNF#2 and VNF#3.
- There is no dependency between VNF#1 and VNF#3.

In all cases it is up to a controller (residing in NS-PoMF) to decide how to interpret this information to a specific action.

For example, the NS is in standby mode but one of the VNFs (e.g. VNF#1) is critical VNF and must not enter standby mode (e.g. because it is stateful data VNF exposing database functionality). In that case, the high dependency of VNF#2 on VNF#1 may for example mean that VNF #2 must also not enter stand-by mode.

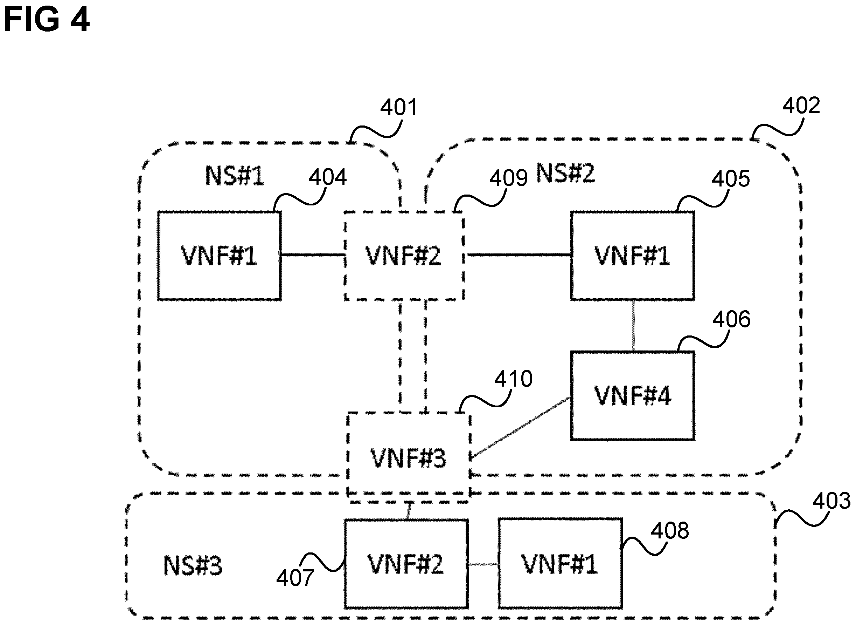

The power weights of type 3 address the case that a VNF is shared between two network services. This is illustrated in figure 4.

Figure 4 illustrates three network services 401, 402, 403 which each comprise respective VNFs (which may be instances of the same VNF) 404, 405, 406, 407, 408 and the first network service 401 and the second network service 402 share a first shared VNF 409 and all three network services 401, 402, 403 share a second shared VNF 410.

In this case, it is signalled to the entity (i.e. communication system component which determines the NS power state(s) whether a VNF is shared between network services, like the NS-PoMF) and, if a VNF is shared, between which network services it is shared and optionally also an importance of the sharing (for the power state of the respective network service).

This may be done, for network service #x, by means of a vector $E_x(t) = [e_{xi}(t)]$ whose ith component $e_{xi}(t)$ indicates whether VNF#i is shared with another network service. For the example of figure 4 these vectors are for instance:

$$E_1(t) = \begin{bmatrix} 0 & 1 & 1 \end{bmatrix}$$

$$E_2(t) = \begin{bmatrix} 0 & 1 & 1 & 0 \end{bmatrix}$$

$$E_3(t) = \begin{bmatrix} 0 & 0 & 1 \end{bmatrix}$$

In this example, the values are 0 (no sharing) and 1 (sharing) but the values may be in the range [0; 1] or other schemes and their magnitudes may indicate the importance of the sharing for the power state of network service #x (this may be considered when resolving conflicts between the dependencies: the dependencies having a higher degree of importance (e.g. represented by power weights with higher magnitudes) are prioritized over those with a lower degree of importance).

Note that in the above scheme matrix $E_i(t)$ for NS $i$ is single dimensional matrix simply describing whether a VNF is shared. A multi-dimensional scheme could be also considered to describe the dependency of shared VNFs and the importance of this sharing with other NSs in a more granular level.

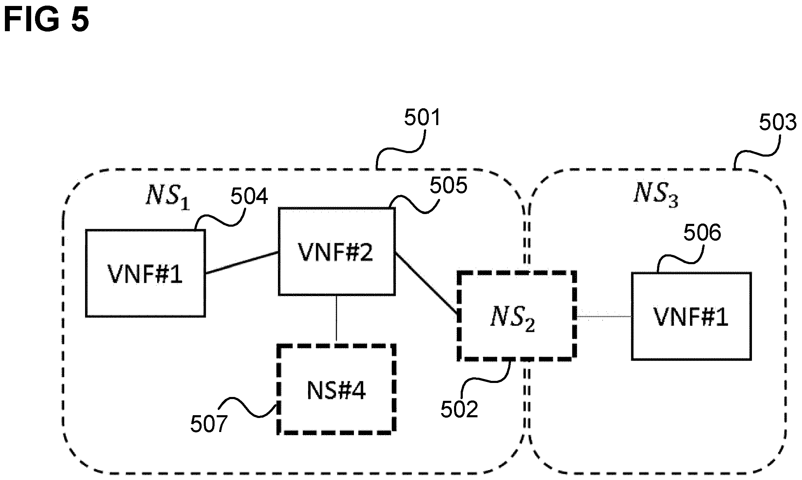

The power weights of type 4 address the case that an entire network service is shared between two network services. This is illustrated in figure 5.

Figure 5 illustrates two network services 501, 503 which each have at least one respective VNF (or VNF instance) 504, 505, 506, 507 and share a network service 502 (i.e. both network services 501, 503 include the network service 502 as a nested sub-service).

This is a common use case under network slicing for example NS#1 belongs to NSSI#1 (NSSI: Network Slice Subnet Instance) and NS#2 belongs to NSSI#2.

In this case, it is signalled to the entity (i.e. communication system component which determines the NS power state(s) whether a network nested (sub-)service is shared between network services).

This may be done, for network service #x, by means of a vector $N_x(t) = [n_j(t)]$ whose jth component $n_j(t)$ indicates whether the network service #j it contains (i.e. the jth subnetwork service of network service #x) is shared with another network service. For the example of figure 5 these vectors are for example:

$$\overline{N}_1(t) = \begin{bmatrix} 1 & 0 \end{bmatrix}$$

NS#1 is using shared NS#2 and NS#4

$$\overline{N}_2(t) = []$$

NS#2 not using a shared NS

$$\overline{N}_3(t) = [1]$$

NS#3 is using shared NS#2

$$\overline{N}_4(t) = []$$

NS#4 not using a shared NS

In this example, the values depicted of 0 (no sharing) and 1 (sharing) may be in the range [0; 1] and their magnitudes may indicate the importance of the sharing for the power state of network service #i, i.e. the interdependency between the network service which share the respective network service.

Note that in the above scheme matrix $N_i(t)$ for NS $i$ is single dimensional matrix simply describing whether a nested NS is shared. A multi-dimensional scheme could be also considered to describe the dependency of shared NSs and the importance of this sharing with other NSs in a more granular level.

The power weights of type 3 (importance of sharing VNFs/CNFs/PNFs with other NFs) and the power weights of type 4 (importance of sharing NSs with other NSs) may be used together with the power weights of type 1 ($\overline{W}_x(t)$: importance of the VNFs/CNFs/PNFs within NS#x) and the power weights of type 2 ($W_x(t)$: importance of relationship of the VNFs/CNFs/PNFs within NS#x) using a respective functions $f_x$ taking the various power weights as well as the $EAS^{VNF}$s (and/or $EAS^{CNF}$s and/or $EAS^{PNF}$s) of NS#x as inputs:

$$EAS^{NS\#x} = f_x(W_x(t), \overline{W}_x(t), E_x(t), N_x(t), EAS^{VNF}, EAS^{CNF}, EAS^{PNF})$$

Depending on the power weights, the function $f_x$ decides about the actual importance of all $EAS^{VNF}$s, $EAS^{CNF}$s and $EAS^{PNF}$s for $EAS^{NS\#x}$. Various options of modelling the input parameters and the output are possible. In all cases it is up to a controller (residing in NS-PoMF) to decide how to interpret this information to a specific action according to $f_x$.

For example, assume $EAS^{VNF}$s, $EAS^{CNF}$s and $EAS^{PNF}$s are expressed in Watts and that $f_x$ is considering summation of all weighted values. Then the summation can give a value of xxx Watts. Based on a policy if this value is a above a threshold then $EAS^{NS\#x}$ is in active state by NS-PoMF and if is lower than the threshold then $EAS^{NS\#x}$ is in standby state. $EAS^{VNF}$s, $EAS^{CNF}$s and $EAS^{PNF}$s are calculated and mapped to actual power consumption. In case a request to change the $EAS^{NS\#x}$ state is coming to NS-PoMF then the corresponding action to affect the corresponding $EAS^{VNF}$s, $EAS^{CNF}$s and $EAS^{PNF}$ is made by NS-PoMF according to a reverse $f_x$ operation.

The function $f_x(W_x(t), \overline{W}_x(t), E_x(t), \overline{N}_x(t), EAS^{VNF}, EAS^{CNF}, EAS^{PNF})$ can in particular be used to dynamically update the power state relationships between the network service and the constituent VNFs, CNFs and PNFs.

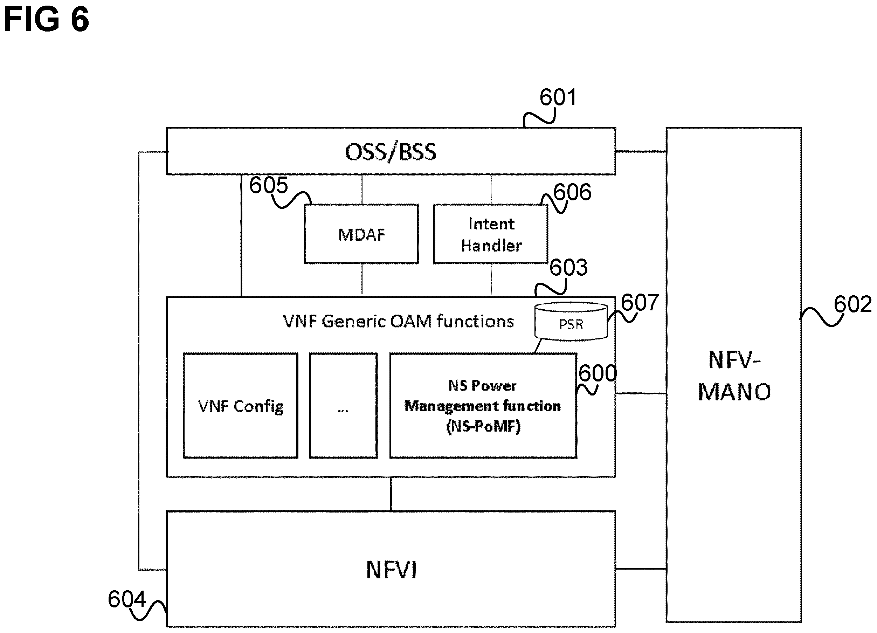

The functions $f_x$ may for example be evaluated in a NS power manager function (NS-PoMF) as illustrated in figure 6.

Figure 6 shows an NFV architecture including a NS power manager function (NS-PoMF) according to an embodiment.

As explained with reference to figure 2, a NFV-MANO system 602 is connected to an OSSBSS 601 and an NFVI 604. These components are connected to further VNF ("e.g. generic") OAM functions 603 which, in this example, include the NS-PoMF 600 (but which may also be included in NFV-MANO 602 itself for example as part of NFVO). The NS-PoMF 600 may be seen to (at least partially) implement a power management system of a respective communication system (e.g. communication system 100 of figure 1).

The NS-PoMF 600 may consider different $f_x$ depending on the use case. $f_x$ selection is decided by the operator and no restriction is imposed on $f_x$ output (e.g., units). Regarding the $f_x$ input besides the VNF/CNF/PNF power states and the corresponding power weights, additional input can be also considered like logging information, management data analytics related to VNF performance, state, etc.

The NS Power Management function (NS-PoMF) 600 for example

- is responsible for the NS power state management
- interacts with OSSBSS and/or other NFV-MANO system components, etc.
- has global knowledge of the NSs Power management status
- triggers updates in the power state at the NS level based on different inputs either on demand or dynamically.
- investigates the impact of transitioning between states (e.g., the entire NS moves into standby mode, etc).
- performs optimized NS LCM coordination with NFV-MANO system components.
- is responsible for power weights allocation, monitoring and fine-tuning
- considers both VNFs, CNFs and PNFs as part of the NS using common identification.

From a management perspective, the following operations are supported (e.g.by the NS Power Management function (NS-PoMF) 600):

- monitor the power consumption related to VNF/CNF, PNF
- manage the state of an entire NS using simple vendor agnostic APIs (e.g. $NS_i$ can enter standby state)
- decouple testing of $EAS^{VNF/CNF/PNF}$ and $EAS^{NS}$ testing.
- perform system recovery actions after $EAS^{NS}$ transitions

Further, the various power weights for example allow realizing the following scenarios:

- If a request is made for a network service to enter stand-by state, not all the VNFs and/or CNFs and/or PNFs should be affected (e.g. the power state of one or more of the network service's VNFs should be kept active), e.g. achieved by suitable setting of the power weights of type 1
- If a specific VNF/CNF/PNF of a network service enters stand-by power state, the power state of the network service should be kept unchanged (to avoid high configuration cost), e.g. achieved by suitable setting of the power weights of type 1
- If a VNF (or CNFs or PNF) enters stand-by a tightly-coupled VNF and/or CNFs and/or PNFs can (or automatically) also enter stand-by, no need to keep it active, e.g. achieved by suitable setting of the power weights of type 2
- If a VNF (or CNFs or PNFs) is shared between network services and one of the network services enters stand-by state this has no impact on the power states of the other network services using the shared VNF. The shared VNF is for example an inventory or database service. This is for example achieved by suitable setting of the power weights of type 3
- If a network service is shared between network services and one of the network services enters stand-by state this has no impact on the power states of the other network services using the shared network service. This is for example achieved by suitable setting of the power weights of type 4.

Weights can be updated in time by the operator to change the relationships between $EAS^{VNF}$, $EAS^{CNF}$, $EAS^{PNF}$ and $EAS^{NS}$.

The NS-PoMF 600 is a logical function and can be implemented as part of the NFV-MANO 602 or externally to the NFV-MANO 602. The NS-PoMF 600 exposes a NS power state management interface for the management of the NS power states. NS-PoMF is a logical function and can be also part of other management systems like SMO or IMS in O-Cloud in O-RAN's framework.

The input of the function $f_x$, in particular the power weight vectors, may be updated in time (e.g. by OSS/BSS 601 or generally a "user", e.g. the operator), for example through a management interface exposed by the NS-PoMF 600 or directly by NFVO 202 (which is part of NFV-MANO 602) when considering NS-PoMF part of NFVO.

The various power weights that form the input of $f_i(W_i(t), \overline{w}_i(t), E_i(t), N_i(t))$ may for example be defined in the network service descriptor (NSD) of NS#x.

For this, an attribute, e.g. denoted as nsdEnergyAwareStateWeights may be introduced into the NSD:

| Attribute | Qualifier | Cardinality | Content | Description |
|---|---|---|---|---|
| nsdEnergyAwar eState Weights | M | 0..1 | energy AwareS tate-Weights | Configuration parameters for the VNF/CNF/PNF power weight allocation. |

This attribute may host the power weights $W_i(t)$, $\overline{W}_i(t)$, $E_i(t)$, $N_i(t)$ as key-value pairs:

| Attribute | Qualifier | Cardinality | Content | Description |
|---|---|---|---|---|
| nf_imp | M | 1 | key:value | key: value pair with the importance of all the EAS_NFs (VNFs, CNFs and PNFs) in the EAS_NS |
| nf_rel | M | 1 | key:value | key: value pair with the importance of all the EAS_NF (VNFs, CNFs and PNFs) relationships with other EAS_NF inside the same EAS_NS |
| nf_ext | M | 1..M | key:value | List with all key: value pairs with the importance of the EAS_NF (VNFs, CNFs and PNFs) relationship with other external EAS_NSs |
| ns_ext | M | 1..M | key:value | List with all key: value pairs with the importance of the EAS_NS relationship with other external EAS_NSs |

These attributes are for example set during instantiation of the respective NS. When handling the NSD for the first time NFVO 202 for example informs NS-PoMF 600 about the power weight allocation.

The attribute nsdEnergyAwareStateWeights can also be updated during the system operation for example when considering an Update NSD info operation or other NS LCM or VNF LCM operations performing runtime configuration of the NS/VNFs. In addition the trigger to update the power weights can be made by OSS/BSS 601 to NS-PoMF 600 based on real-time performance and/or interaction with other functions like the Management Data Analytics function (MDAF) 605 and/or an intent handler 606, e.g. connected to the NS-PoMF 600.

The NS-PoMF 600 is used to monitor all the parameter relevant for the EAS$^{NS\#x}$ to assess the right operation to be performed. Depending on real-time information regarding EAS$^{NS\#x}$ and also other input like from the MDA 605 and/or the intent handler 606 (i.e. intent management), the NS-PoMF 600 can autonomously decide to update the power weights. It can also autonomously decide the power state of the entire network service.

According to various embodiments, the NS-PoMF 600 is also responsible for network service state management and restoration. The NS-PoMF 600 can manage the EASs for VNFs, CNFs and PNFs with constitute the respective network service.

Further, the NS-PoMF 600 controls and monitors the transitions between NS energy states.

For example, the trigger to update the real-time power state EAS$^{NS\#x}$ can be made by the NS-PoMF 600 based on real-time performance and/or interaction with the MDAF 605 and/or the intent handler 606.

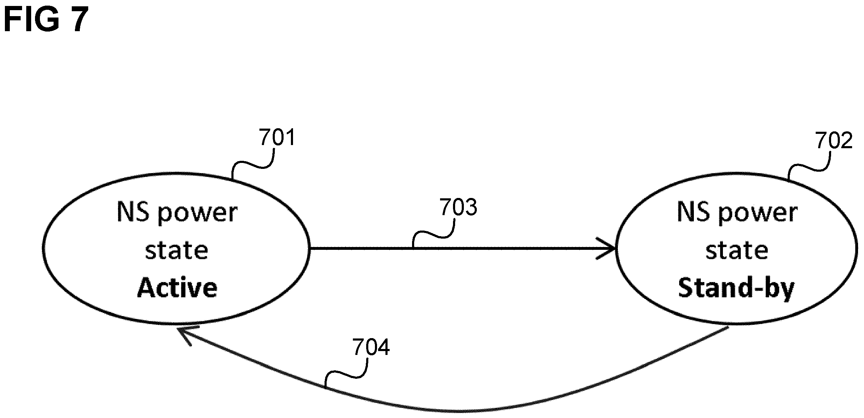

The NS-PoMF 600 may maintain a NS power states registry (PSR) 607 where configuration information is stored (including the power weights) for all network services whose EASs the NS-PoMF 600 manages. The configuration information includes information which allows the NS-PoMF 600, when updating an NS EAS to another EAS to restore the NS to the operational state before the update using the saved configuration information (this may also depend on the power weights which were set prior to the update). This is described in more detail in the following with reference to figure 7.

Figure 7 illustrates a network service moving 703 from active power state 701 to stand-by power state 702 and returning 704 from stand-by power state 702 to active power state 701.

To set the NS 701 into stand-by power state 702, the following is for example performed (e.g. by the NS-PoMF 600 through interaction with NFVI 604, NFV-MANO 602, etc.):

- save NS configuration (including power weights) and management information in a registry (with timestamps and versioning), e.g. in PSR 607.
- keep the NS status data held by the management and orchestration systems.

- create NS configuration snapshots, keep state and configuration data (e.g., IP address information, interface identification, gateway identification and configuration, etc.) of the NS and the relevant VNF/VNFC that constitute the NS and that can be used in restoration procedures.
- keep track of and map of NFVI resources, so affected resources can be determined, and their power state be changed with respect to the VNF/CNF/PNF stand-by mode.
- solve conflicts regarding power weight allocation of shared VNFs and shared NSs.

An exemplary flow is as follows:

1) EAS is "active" (i.e. the NS is in active state 701) and the NS-PoMF 600 decides to move it to stand-by power state 702.
2) The NS-PoMF 600 saves the NS power profile configuration (i.e. the configuration information):

    a) The NS-PoMF 600 saves the network configuration for all the VNFs/CNFs/PNFs in the PSR 607.
    b) the NS-PoMF 600 saves the power weight allocation in the PSR 607.
    c) the NS-PoMF 600 saves information about any other related configuration in the PSR 607.

3) The NS-PoMF 600 trigger the transition 703 to stand-by power state 702
4) The NS-PoMF 600 saves configuration information for the stand-by power state 702 (similarly to step 2 for the active power state 701).
5) The NS-PoMF 600 triggers the transition 704 to active power state 701 (i.e. active EAS).
6) The NS-PoMF 600 uses the configuration information stored in the PSR 607 to restore the configuration of the network service before the transition 703 to stand-by power state (e.g. the same VDUs (virtual deployment units, the same host machine(s), the same IP address, etc. are used by the network service as before the transition 703 to stand-by power state) and transitions back to active power state 701.

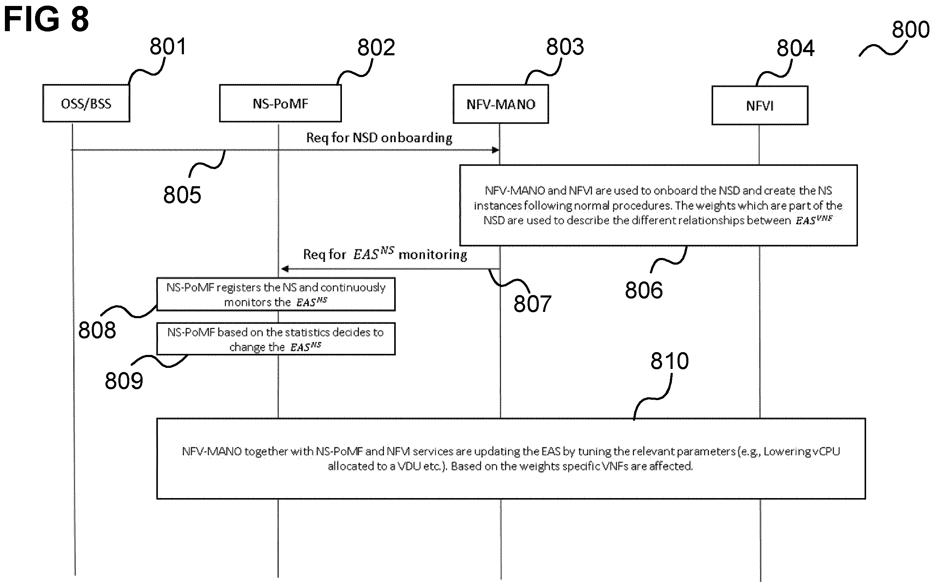

Figure 8 shows a flow diagram 800 illustrating a procedure for autonomously updating the NS power state through the NS-PoMF 600.

As described with reference to figure 6, an OSSBSS 801, an NS-PoMF 802, an NFV-MANO 803 and an NFVI 804 are involved in the flow. In the description NS-PoMF is considered as a management entity outside NFV-MANO.

In 805, the OSSBSS 801 sends a request for NSD onboarding to the NFV-MANO 803.

In 806, the NFV-MANO 803 and the NFVI 804 are used to onboard the NSD and create the NS instances following normal procedures. The power weights which are part of the NSD are used to describe the different relationships between $EAS^{VNF}$s of VNFs of the respective network service (and similarly for CNFs, PNFs).

In 807, the NFV-MANO 803 sends a request for NS EAS registration and monitoring to the NS-PoMF 802.

In 808, the NS-PoMF 802 registers the NS and continuously monitors the EAS of the NS.

In 809, the NS-PoMF 802 decides, e.g. based on statistics information, to change the NS EAS.

In 810, the NFV-MANO 803 together with NS-PoMF 802 and NFVI 804 services update the $EAS^{NS}$ by tuning the relevant parameters (e.g., lowering vCPU allocated to a VDU, etc.). Based on the power weights specific VNFs, CNFs and PNFs are affected .

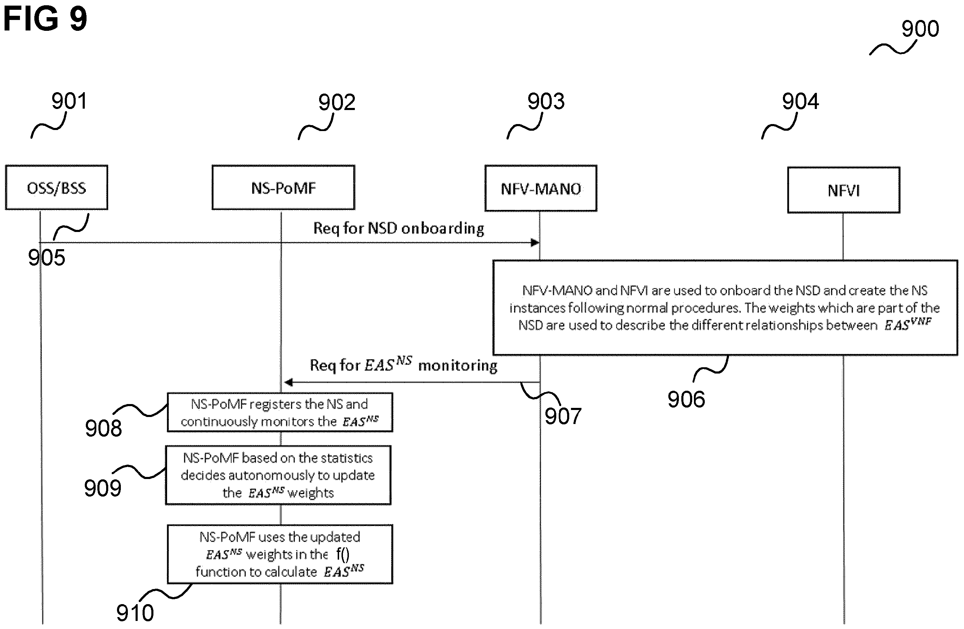

Figure 9 shows a flow diagram 900 illustrating a procedure for autonomously updating the NS power weights through the NS-PoMF 600.

As described with reference to figure 6, an OSSBSS 901, an NS-PoMF 902, an NFV-MANO 903 and an NFVI 904 are involved in the flow.

In 905, the OSS/BSS 901 sends a request for NSD onboarding to the NFV-MANO 903.

In 906, the NFV-MANO 903 and the NFVI 904 are used to onboard the NSD and create the NS instances following normal procedures. The power weights which are part of the NSD are used to describe the different relationships between $EAS^{VNF}$s of VNFs of the respective network service and similarly for CNFs and PNFs.

In 907, the NFV-MANO 903 sends a request for NS EAS monitoring to the NS-PoMF 902.

In 908, the NS-PoMF 902 registers the NS and continuously monitors the EAS of the NS.

In 909, the NS-PoMF 902, e.g. based on statistics information, decides autonomously to update the NS EAS power weights.

In 910, the NS-PoMF 902 uses the updated $EAS^{NS}$ power weights in the function $f_x$ to calculate $EAS^{NS}$.

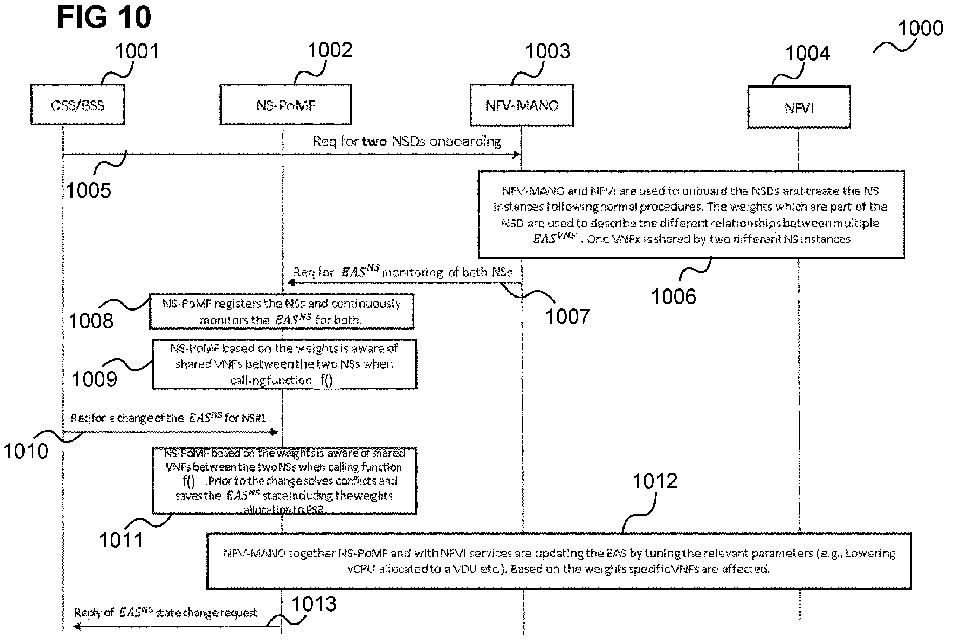

Figure 10 shows a flow diagram 1000 illustrating a procedure for autonomously updating the NS power state through the NS-PoMF 600 of a shared VNF.

As described with reference to figure 6, an OSSBSS 1001, an NS-PoMF 1002, an NFV-MANO 1003 and an NFVI 1004 are involved in the flow.

In 1005, the OSS/BSS 1001 sends requests for NSD onboarding of two NSDs to the NFV-MANO 1003.

In 1006, the NFV-MANO 1003 and the NFVI 1004 NFV-MANO onboard the NSDs and create NS instances for the respective network services following normal procedures. The power weights which are part of the NSDs are used to describe the different relationships between $EAS^{VNF}$s of VNFs of the respective network service. It is assumed that one VNF ("VNFx") is shared by the two NSs. The power weight values can be set by OSS or by NS-PoMF.

In 1007, the NFV-MANO 1003 sends a request for NS EAS monitoring to the NS-PoMF 802 for both network services.

In 1008, the NS-PoMF 1002 registers both the NSs and continuously monitors the EAS of the NSs.

In 1009, the NS-PoMF 1002 is aware of the VNF sharing between the two NSs and monitors the system for potential events that may affect the relationship.

In 1010, the OSSBSS 1002 requests a change of the EAS of NS#1 from the NS-PoMF 1003.

In 1011, the NS-PoMF 1003 based on the power weights is aware of shared VNFs between the two network services when calling function function $f_x$. Prior to the change it solves conflicts and saves the $EAS^{NS}$ including the power weight allocation in the PSR 607.

In 1012, the NFV-MANO 1003 together with NFVI services updates the EAS of NS#1 by tuning the relevant parameters (e.g. lowering vCPU allocated to a VDU, etc.). Based on the power weights specific VNFs are affected.

In 1013, the NS-PoMF 1003 replies to (e.g. acknowledges) the EAS change request of 1011.

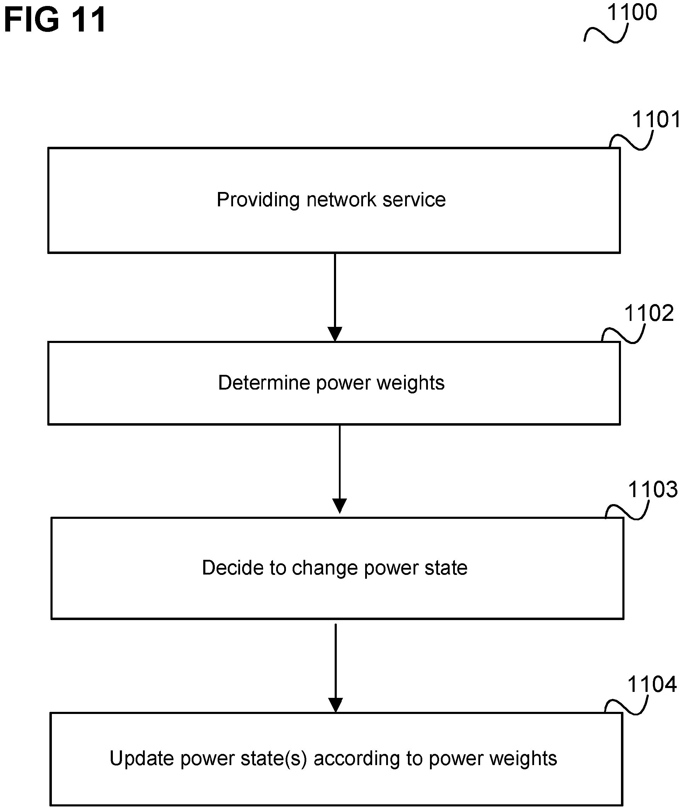

In summary, according to various embodiments, a method for power management of a communication system is provided as illustrated in figure 11.

Figure 11 shows a flow diagram 1100 illustrating a method for power management of communication system.

In 1101, a network service is provided by means of one or more functional component.

In 1102, one or more power weights are determined, each power weight specifying a dependency

- between a power state of the network service and the power state of a respective functional component (of the one or more functional components),
- between the power states of two respective functional components (of the one or more functional components) or
- between the power state of a respective functional component (of the network service) and another network service.

In 1103, it is decided to change the power state of at least one of the network service and the one or more functional components.

In 1104, in response to the decided change (e.g. reception of the decision), the power states of the network service and the one or more functional components taking into account the dependencies of the power state of the network service and/or of the one or more functional components (in particular from the power state whose change has been decided) as specified by the power weights.

According to various embodiments, in other words, a NS is managed in terms of "power management" in a dynamic way considering power weights.

The approach of figure 11 allows considering the special characteristics that constitute a VNF (jointly considering physical and virtual resources, application and VNF LCM) in a dynamic way for power management of a NS containing the VNF and similarly for CNFs and PNFs.

According to various embodiments, NS state restoration after exiting sleep mode/standby mode is provided, i.e. a mechanism to restore NS operational state after any power state transition is provided.

It should be noted that the approach of figure 11 enables interactions not only with frameworks like NFV-MANO and OSS but also with all services offered for example by a generic OAM functions framework and also O-RAN SMO and/or O-RAN O-Cloud IMS.

According to various embodiments, the approach of figure 11 is used to control and power consumption and increase energy efficiency in a virtualized and/or cloudified environment. It has many potential use cases (e.g., O-RAN's driven intelligent control) associated to energy efficiency, application of energy consumption policies, etc. and there are many possible embodiments, including NS power management for:

- Nested NS
- NS under sharing/slicing
- NSs based on CNFs, PNFs and VNFs
- NSs in O-RAN

The approach of figure 11 enables flexibility of the way NS power management can be further simplified and optimized and can be operated over multi-technology VNF/CNF environments (VM-based, container-based or mixed).

So, according to various embodiments, a telecommunication operator orchestration mechanism can be enhanced with new methods/mechanisms and interfaces which can enable NS power management and optimize energy efficiency. It enables the concept of NS standby mode combining SW and HW sleep mode approaches. This type of management can be exploited and be part of an integrated orchestration plane.

The method of figure 11 may be carried out by a power management system having one or more components. These components may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

**Claims**

1.  A method for power management of a communication system, comprising:

    Providing a network service by means of one or more functional components;
    Determining one or more power weights, each power weight specifying a dependency

    - between a power state of the network service and the power state of a respective functional component,
    - between the power states of two respective functional components of the one or more functional components or
    - between the power state of a respective functional component and another network service;

    Deciding to change the power state of at least one of the network service and the one or more functional components; and
    Updating, in response to the decided change, the power states of the network service and the one or more functional components taking into account the dependencies of the power state of the network service and/or of the one or more functional components as specified by the power weights.

2.  The method of claim 1, wherein the one or more functional components are one or more virtual network functions, one or more cloudified network functions, one or more physical network functions and/or one or more nested network services.

3.  The method of claim 1 or 2, wherein for each power weight the magnitude of the respective power weight specifies a degree of the respective dependency and the updating takes the specified degree of the respective dependency into account.

4.  The method of any one of claims 1 to 3, wherein the updating resolves conflicts by comparing degrees of dependencies and respecting dependencies between functional components.

5.  The method of any one of claims 1 to 4, wherein at least one of the one or more power weights specifies that a respective first functional component must not go into a first power state when a respective dependent second functional component is in a second power state.

6.  The method of any one of claims 1 to 5, wherein the decided change is a change of the power state of the network service and wherein at least one of the one or more power weights specifies that the power state of a respective functional component is kept unchanged when the power state of the network service is changed in response to the decided change.

7.  The method of any one of claims 1 to 5, wherein the decided change is a change of the power state of one of the functional components and wherein at least one of the one or more power weights specifies that the power state of the network service is kept unchanged when the power state of the one of the functional component is changed in response to the decided change.

8.  The method of any one of claims 1 to 7, wherein at least one of the one or more power weights specifies that the power state of a respective functional component, wherein the respective functional component is shared with the other network service, must respect the power state of the other network service when updating the power state of the respective functional component.

9. The method of any one of claims 1 to 8, wherein the decided change is a return from a second power state to a first power state, wherein an earlier change changed the power state from the first power state to the second power state.

10. The method of claim 9, comprising saving the power weights when changing the power state from the first power state to the second power state.

11. The method of claim 10, comprising taking into account the dependencies of the power state of the network service and/or of the one or more functional components as specified by the saved power weights.

12. The method of any one of claims 1 to 11, wherein determining the one or more power weights comprises receiving a network service descriptor of the network service and reading the power weights from the network service descriptor.

13. The method of any one of claims 1 to 12, comprising updating the power weights in response to operation information about the communication system and storing the updated power weights.

14. A power management system of a communication system configured to perform the method of any one of claims 1 to 13.

FIG 1

NS = Network Slice
NSi = Network Slice Instance
NSSF = Network Slice Selection Function
—— User Plane interface
- - - Control Plane interface

# FIG 2

200

Network Service 206

OSS/BSS 201

NFVO 202

VNFM 203

*manages*

*manages*

VIM 204

CISM 205

AF VNF 210

PCF VNF 209

SMF VNF 208

AMF PNF 207

VM 213

VM 212

VM 214

Physical Server COTS 215

NFVI 211

ATCA 216

Container

# FIG 3

VNF1 Power states

VNF2 Power states

VNF3 Power states

Network Service#1

NS#1 Power states

# FIG 4

# FIG 5

**FIG 6**

EP 4 539 560 A1

# FIG 7

701

702

703

704

NS power state **Active**

NS power state **Stand-by**

# FIG 8

**800**

| 801 | 802 | 803 | 804 |
|-----|-----|-----|-----|
| OSS/BSS | NS-PoMF | NFV-MANO | NFVI |

Req for NSD onboarding

**805**

NFV-MANO and NFVI are used to onboard the NSD and create the NS instances following normal procedures. The weights which are part of the NSD are used to describe the different relationships between $EAS^{VNF}$

**806**

Req for $EAS^{NS}$ monitoring

**807**

NS-PoMF registers the NS and continuously monitors the $EAS^{NS}$

**808**

NS-PoMF based on the statistics decides to change the $EAS^{NS}$

**809**

**810**

NFV-MANO together with NS-PoMF and NFVI services are updating the EAS by tuning the relevant parameters (e.g., Lowering vCPU allocated to a VDU etc.). Based on the weights specific VNFs are affected.

EP 4 539 560 A1

# FIG 9

900

901 OSS/BSS

902 NS-PoMF

903 NFV-MANO

904 NFVI

905 Req for NSD onboarding

906 NFV-MANO and NFVI are used to onboard the NSD and create the NS instances following normal procedures. The weights which are part of the NSD are used to describe the different relationships between $EAS^{VNF}$

907 Req for $EAS^{NS}$ monitoring

908 NS-PoMF registers the NS and continuously monitors the $EAS^{NS}$

909 NS-PoMF based on the statistics decides autonomously to update the $EAS^{NS}$ weights

910 NS-PoMF uses the updated $EAS^{NS}$ weights in the $f()$ function to calculate $EAS^{NS}$

EP 4 539 560 A1

# FIG 10

FIG 10 — 1000

- 1001 OSS/BSS
- 1002 NS-PoMF
- 1003 NFV-MANO
- 1004 NFVI

Req for **two** NSDs onboarding

1005

1006 — NFV-MANO and NFVI are used to onboard the NSDs and create the NS instances following normal procedures. The weights which are part of the NSD are used to describe the different relationships between multiple $EAS^{VNF}$ . One VNFx is shared by two different NS instances

1007 — Req for $EAS^{NS}$ monitoring of both NSs

1008 — NS-PoMF registers the NSs and continuously monitors the $EAS^{NS}$ for both.

1009 — NS-PoMF based on the weights is aware of shared VNFs between the two NSs when calling function $f()$

1010 — Req for a change of the $EAS^{NS}$ for NS#1

1011 — NS-PoMF based on the weights is aware of shared VNFs between the two NSs when calling function $f()$ . Prior to the change solves conflicts and saves the $EAS^{NS}$ state including the weights allocation to PSR

1012 — NFV-MANO together NS-PoMF and with NFVI services are updating the EAS by tuning the relevant parameters (e.g., Lowering vCPU allocated to a VDU etc.). Based on the weights specific VNFs are affected.

1013 — Reply of $EAS^{NS}$ state change request

EP 4 539 560 A1

# FIG 11

1100

1101

Providing network service

1102

Determine power weights

1103

Decide to change power state

1104

Update power state(s) according to power weights

Europäisches
Patentamt

European
Patent Office

Office européen
des brevets

# EUROPEAN SEARCH REPORT

Application Number

EP 23 20 3209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 179 673 A1 (HUAWEI TECH CO LTD [CN]) 14 June 2017 (2017-06-14) * paragraphs [0013], [0017], [0037], [0050], [0068], [0074], [0081], [0084] * | 1-14 | INV.<br>H04W52/28<br>H04L41/08<br>H04L41/0895<br>H04L41/122<br>H04W16/10 |
| X | US 2014/258739 A1 (GUNASEKARA DON [US] ET AL) 11 September 2014 (2014-09-11) * paragraphs [0005] – [0014], [0069] * | 1-14 | H04W24/02<br>H04W52/02<br>H04W72/044<br>H04W72/50 |

TECHNICAL FIELDS
SEARCHED      (IPC)

H04W
H04L

The present search report has been drawn up for all claims

| Place of search | Date of completion of the search | Examiner |
|---|---|---|
| The Hague | 19 March 2024 | Ntogari, Georgia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 3209

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2024

| Patent document cited in search report | | Publication date | Patent family member(s) | | Publication date |
|---|---|---|---|---|---|
| EP 3179673 | A1 | 14-06-2017 | BR | 112017003862 A2 | 26-06-2018 |
| | | | CN | 105376083 A | 02-03-2016 |
| | | | EP | 3179673 A1 | 14-06-2017 |
| | | | JP | 6450835 B2 | 09-01-2019 |
| | | | JP | 2017531370 A | 19-10-2017 |
| | | | KR | 20170046721 A | 02-05-2017 |
| | | | US | 2017171015 A1 | 15-06-2017 |
| | | | WO | 2016029726 A1 | 03-03-2016 |
| US 2014258739 | A1 | 11-09-2014 | NONE | | |

For more details about this annex : see Official Journal of the European Patent Office, No. 12/82